(19) **Europäisches Patentamt**
**European Patent Office**
**Office européen des brevets**

(11) **EP 4 488 315 A1**

(12) **EUROPEAN PATENT APPLICATION**

(43) Date of publication:
08.01.2025 Bulletin 2025/02

(21) Application number: 23184224.6

(22) Date of filing: 07.07.2023

(51) International Patent Classification (IPC):
**C08G 59/68** (2006.01)

(52) Cooperative Patent Classification (CPC):
(C-Sets available)
**C09J 163/00; C08G 59/50; C08G 59/686;
C08K 3/30** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hilti Aktiengesellschaft
9494 Schaan (LI)**

(72) Inventor: **Behrens, Nicole
81245 München (DE)**

(74) Representative: **Hilti Aktiengesellschaft
Corporate Intellectual Property
Feldkircherstrasse 100
Postfach 333
9494 Schaan (LI)**

(54) **CURING AGENT COMPOSITION COMPRISING SALTS OF THIOCYANATE**

(57) The present invention relates to a curing composition comprising at least one amine which is reactive to epoxy groups and at least one salt of thiocyanate. The present invention further relates to a use of the at least one salt of thiocyanate in a multi component epoxy resin material for anchoring means. The invention further relates to a multi-component epoxy resin material, a mortar composition, and a method for the chemical fastening of construction element in boreholes.

EP 4 488 315 A1

(52)  Cooperative Patent Classification (CPC): (Cont.)

C-Sets
**C08K 3/30, C08L 63/00**

**Description**

The present invention relates to a curing composition comprising at least one amine which is reactive to epoxy groups and at least one salt of thiocyanate. The present invention further relates to a use of the at least one salt of thiocyanate in a multi component epoxy resin material for anchoring means. The invention further relates to a multi-component epoxy resin material, a mortar composition, and a method for the chemical fastening of construction element in boreholes.

Multi-component mortar systems based on curable epoxy resins and curing compositions comprising amines are known in the art. Such multi-component mortar systems are typically used as adhesives, spackling pastes for repairing cracks, and chemical anchors for fastening construction elements such as anchor rods, reinforcing bars, and screws in boreholes of various substrates. In the art, nitrates, triflates, bisphenols and novolac resins are used as accelerators in the curing compositions comprising amines.

For example, WO 2020/058017 A1 describes compositions for anchoring means wherein nitrates and triflates are used as accelerators in epoxy resin compositions comprising isophorone diamine and 1,3-bis(aminomethyl)cyclohexane. Similarly, WO 2021/185607 A1 teaches use of nitrate and triflate salts as accelerators in epoxy resin systems comprising m-xylylenediamine, 1,2-diaminocyclohexane and 1,3-bis(aminomethyl)cyclohexane. Nitrates, like calcium nitrate-tetrahydrate used in the documents mentioned above, bring water of crystallization into the formulations which is detrimental if silanes, cement or other water-sensitive materials need to be used in the same component. Triflates are expensive and at the date of filing are not REACH registered, thereby preventing their use in the European Union. WO 2019/101563 A1 discloses bisphenols and novolac resins used as accelerators for curing an epoxy resin composition comprising m-xylylenediamine, 1,2-diaminocyclohexane, and 1,3-bis(aminomethyl)cyclohexane.

Thus, there is still a need to find new accelerators for curing compositions which, when used in a mortar for fastening means, would impart an improved pullout strength/load values in dry boreholes. Further, there is also a need for new accelerators which are less expensive, REACH registered and do not contain water of crystallization.

Surprisingly it has been found that salts of thiocyanate can be used instead of calcium nitrate or calcium triflate in the curing compositions comprising at least one amine which is reactive to epoxy groups. Even more surprisingly, mortar compositions comprising salts of thiocyanate in the curing composition showed an improvement in pull-out strength/load values in dry boreholes under standard conditions and at high temperature (80 °C) in comparison to mortars having calcium nitrate or calcium triflate as part of their curing compositions.

Thus, the objection of the present invention is to provide a curing composition comprising an accelerator that is less expensive, without water of crystallization and REACH registered. Yet another object of the present invention is to provide a multi-component epoxy resin material suitable for fastening means that has an improved pullout strength/load values at standard conditions and at elevated temperatures (e.g. 45°C to 55 °C) when used in the dry boreholes.

The object of the invention is achieved by providing a curing composition according to claim 1. Preferred embodiments of the curing composition according to the present invention are provided in the dependent claims and the preferred embodiments below, which may optionally be combined with one another.

The invention further relates to a multi-component epoxy resin material according to claim 9. Preferred embodiments of the multi-component epoxy resin material according to the invention are provided in the dependent claims and the preferred embodiments below, which may optionally be combined with one another.

The invention further relates to a mortar composition according to claim 15, a use of at least one salt of thiocyanate according to claim 16 and a method for the chemical fastening according to claim 17.

For better understanding of the invention, the following explanations of the terminology used herein are considered to be useful. Within the meaning of the invention:

"a" or "an" as articles preceding a chemical compound class mean that one or more compounds falling under that chemical compound class may be meant. In a preferred embodiment, these articles mean only a single compound;

*"aliphatic compounds"* are acyclic or cyclic, saturated or unsaturated carbon compounds, excluding aromatic compounds;

*"alicyclic compounds"* are compounds having a carbocyclic ring structure, excluding benzene derivatives or other aromatic systems;

*"araliphatic compounds"* are aliphatic compounds having an aromatic backbone such that, in the case of a functionalized araliphatic compound, a functional group that is present is bonded to the aliphatic rather than the aromatic part of the compound;

*"aromatic compounds"* are compounds which follow Hückel's (4n+2) rule;

*"at least one"* means numerically "one *or more"*. In a preferred embodiment, the term numerically means "one", in another embodiment the term may mean "two", "three", "four", "five", "six", "seven", "eight", "nine", "ten" or respectively any number more than "one";

*"amines"* are compounds which are derived from ammonia by replacing one, two or three hydrogen atoms with hydrocarbon groups, and have the general structures $RNH_2$ (primary amines), $R_2NH$ (secondary amines) and $R_3N$ (tertiary amines) (see: IUPAC Compendium of Chemical Terminology, 2nd ed. (the "Gold Book"), compiled by A. D. McNaught and A. Wilkinson, Blackwell Scientific Publications, Oxford (1997));

*"salt'* is a compound that is made up of positively charged ion (cation) and negatively charged ion (anion). There are ionic bonds between these ions. The expression *"salt of thiocyanate"* describes a compound which comprises, as an anion, a thiocyanate ($SCN^-$). Thiocyanate, also known as rhodamine, is the conjugate base of thiocyanic acid;

*"include"* and "comprising" mean that there may be other components in addition to those mentioned. These terms are meant inclusively and therefore include *"consisting of"*. "Consisting of" is meant conclusively and means that no further constituents may be present. In an another embodiment, the terms *"comprise"* or *"comprising"* mean *"consisting of"*; and

a range delimited by numbers, e.g. *"from 80 to 120 weight* %" means that the two corner values and each value within that range are individually disclosed.

All standards cited in this text (e.g. DIN standards) were used in the version that was current on the filing date of this application.

Thus, the present invention relates to a curing composition comprising at least one amine which is reactive to epoxy groups and at least one salt of thiocyanate. It is understood that according to the present invention at least one salt of thiocyanate functions as an accelerator in the curing composition or in any one of the embodiments as described herewith.

It is preferred that the amount of the at least one salt of thiocyanate is in the range of from 0.1 to 15 weight % based on the total weight of the curing composition, more preferably in the range of from 1 to 10 weight %, more preferably in the range of from 2 to 8 weight %, more preferably in the range of from 3 to 6 weight %, more preferably in the range of from 4 to 5 weight %.

It is preferred that the at least one salt of thiocyanate is selected from the group consisting of ammonium thiocyanate, sodium thiocyanate, potassium thiocyanate, imidazolinium thiocyanate, guanidin thiocyanate, copper (I) thiocyanate, tetrabutylammonium thiocyanate, calcium thiocyanate, lithium thiocyanate, magnesium thiocyanate, and mixtures of two or more thereof, more preferably from the group consisting of ammonium thiocyanate, sodium thiocyanate, potassium thiocyanate and mixtures of two or more thereof, more preferably at least one salt of thiocyanate is ammonium thiocyanate and/or potassium thiocyanate.

It is preferred that the at least one amine is selected from the group consisting of aliphatic amines, alicyclic amines, araliphatic amines, aromatic amines, Mannich bases and mixtures of two or more thereof, wherein the at least one amine has on average at least two reactive hydrogen atoms per molecule which are bonded to a nitrogen atom, and preferably wherein the at least one amine is a polyamine having at least two amino groups in the polyamine molecule. It is preferred that the amount of the at least one amine is in the range of from 10 to 90 weight % based on the total weight of the curing composition, more preferably in the range of from 35 to 60 weight %, more preferably in the range of from 37 to 43 weight %.

Examples of suitable amines which are reactive to epoxy groups are given below, but without restricting the scope of the invention: 1,2-diaminoethane(ethylenediamine), 1,2-propanediamine, 1,3-propanediamine, 1,4-diaminobutane, 2,2-dimethyl-1,3-propanediamine (neopentanediamine), diethylaminopropylamine (DEAPA), 2-methyl-1,5-diaminopentane, 1,3-diaminopentane, 1,3-diaminopentane, 2,2,4- or 2,4,4-trimethyl-1,6-diaminohexane and mixtures thereof (TMD), 1,3-bis(aminomethyl)-cyclohexane (1,3-BAC), 1,2-bis(aminomethyl)cyclohexane, hexamethylenediamine (HMD), 1,2-diaminocyclohexane (DCH), 1,4-diaminocyclohexane (1,4-DACH), bis(4-amino-3-methylcyclohexyl) methane, diethylenetriamine (DETA), 4-azaheptane-1,7-diamine, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis(3-aminopropyl)methylamine, triethylenetetramine (TETA), tetraethylenepentamine (TEPA), pentaethylenehexamine (PEHA), 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornane diamine), dimethyldipropylenetriamine, dimethylaminopropylaminopropylamine (DMAPAPA), 3-aminomethyl-3,5,5-trimethylcyclohexyl amine (isophorone diamine (IPDA)), diaminodicyclohexyl methane (PACM), diethylmethylbenzenediamine (DETDA), 4,4'-diaminodiphenylsulfone (dapsone), mixed polycyclic amines (MPCA) (e.g. Ancamine® 2168), dimethyldiaminodicyclohexylmethane (Laromin C260), 2,2-bis(4-aminocyclohexyl)propane, (3(4),8(9)bis(aminomethyldicyclo[5.2.1.0$^{2,6}$]decane (mixture of isomers, tricyclic primary amines; TCD-diamine), methyldiaminocyclohexane (MDACH), N,N'-diaminopropyl-2-methylcyclohexane-1,3-diamine, N,N'-diaminopropyl-4-methylcyclohexane-1,3-diamine, N-(3-aminopropyl)cyclohexylamine, and 2-(2,2,6,6-tetramethylpiperidin-4-yl)propane-1,3-diamine.

Preferred suitable amines which are reactive to epoxy groups in the curing composition according to the invention are polyamines, such as 2-methylpentanediamine (DYTEK® A), 3-aminomethyl-3,5,5-trimethylcyclohexane (IPDA), 1,3-benzenedimethanamine (m-xylylenediamine, mXDA), 1,2-diaminocyclohexane (DCH), 1,4-benzenedimethanamine (p-xylylenediamine, PXDA), 1,6-diamino-2,2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), (3(4),8(9)bis(aminomethyl)dicyclo[5.2.1.0$^{2,6}$]decane (mixture of isomers, tricyclic primary amines; TCD-diamine), 1,14-diamino-4,11-dioxatetradecane, dipropylenetriamine, 2-methyl-1,5-pentanediamine, N,N'-dicyclohexyl-1,6-hexanediamine, N, N'-dimethyl-1,3-diaminopropane, N,N'-diethyl-1,3-diaminopropane, N,N-dimethyl-1,3-diaminopropane, secondary polyoxypropylenedi- and triamines, 2,5-diamino-2,5-dimethylhexane, bis(amino-methyl)tricyclopentadiene, 1,8-diamino-p-menthane, bis(4-amino-3,5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, piperazine and methyldiaminocyclohexane (MDACH).

All the amines as outlined above can be used both individually and in a mixture of two or more of the specified amines.

The Mannich bases used in the curing composition according to the invention in combination with the above-described amines which are reactive to epoxy groups are the reaction products of an amine and an aldehyde with a phenolic compound selected from the group consisting of phenol, pyrocatechol, resorcinol, hydroquinone, hydroxyhydroquinone, phloroglucinol, pyrogallol, o-cresol, m-cresol, p-cresol, bisphenols such as bisphenol F or bisphenol A, and combinations thereof.

In order to form the Mannich base, the phenolic compound is reacted with a preferably primary or secondary amine and an aldehyde or an aldehyde precursor which results in an aldehyde as a result of decomposition. The aldehyde or the aldehyde precursor may advantageously be added to the reaction mixture as an aqueous solution, in particular at an elevated temperature of from approximately 50°C to 90°C, and reacted with the amine and the phenolic compound.

Phenol or a styrenated phenol, resorcinol, styrenated resorcinol, bisphenol A or bisphenol F are preferably used as the phenolic compound for forming the Mannich base, with phenol or a styrenated phenol, styrenated resorcinol or bisphenol A particularly preferably being used.

The aldehyde used to form the Mannich base is preferably an aliphatic aldehyde, particularly preferably formaldehyde. Trioxane or paraformaldehyde, which decompose to form formaldehyde by being heated in the presence of water, can preferably be used as an aldehyde precursor.

The amine used for reacting with the aldehyde and the phenolic compound so as to form the Mannich base is preferably one of the above-mentioned amines which are reactive to epoxy groups, and preferably 1,3-benzenedimethanamine (mXDA), 3-aminomethyl-3,5,5-trimethylcyclohexane (IPDA), 1,3-bis(aminomethyl)cyclohexane (1,3-BAC), iaminodicyclohexyl methane (PACM), methylcyclohexyl diamine (mCDA) and 5-(aminomethyl)bicyclo[[2.2.1]hept-2-yl]methylamine (NBDA). The amine is preferably present in excess, such that the Mannich base has free amino groups.

The amine used for reacting with the aldehyde and the phenolic compound so as to form the Mannich base can also be an aminosilane selected from the group consisting of 3-aminoalkyltrialkoxysilanes, such as 3-aminopropyl-tri(m)ethoxysilane, 3-aminoalkylalkyl dialkoxysilane, such as 3-aminopropylmethyldi(m)ethoxysilane, N-(aminoalkyl)-3-aminoalkyltrialkoxysilanes, such as N-(2-aminoethyl)-3-aminopropyltri(m)ethoxysilane, N-(aminoalkyl)-3-aminoalkyl-alkyldialkoxysilanes such as N-(2-aminoethyl)-3-aminopropylmethyldi(m)ethoxysilane, 3-[2-(2-aminoethylamino)ethylamino]propyltri(m)ethoxysilane, bis-(gamma-trimethoxysilylpropyl)amine, or mixtures thereof; or also selected from the group consisting of N-cyclohexyl-3-aminopropyltri(m)ethoxysilane, N-cyclohexylaminomethylmethyldiethoxysilane, N-cyclohexylaminomethyltriethoxysilane, 3-ureidopropyltri(m)ethoxysilane, N-methyl[3-(trimethoxysilyl)-propylcarbamate, N-trimethoxysilylmethyl-O-methylcarbamate and N-dimethoxy(methyl)silylmethyl-O-methylcarbamate.

According to the present invention it is particularly preferred that the at least one amine is selected from the group consisting of isophorone diamine (IPDA), 1,3-cyclohexane bis(methylamin) (1,3-BAC), m-Xylelenediamine (mXDA), methyldiaminocyclohexane (MDACH), 1,2-diaminocyclohexane (DCH), and mixtures of two or more thereof, preferably the at least one amine consists of IPDA and 1,3-BAC, or preferably the at least one amine consists of mXDA, MDACH and 1,3-BAC, or preferably the at least one amine consists of mXDA, DCH and 1,3-BAC.

It is preferred that the amount of the at least one amine is in the range of from 10 to 90 weight % based on the total weight of the curing composition, more preferably in the range of from 35 to 60 weight %, and more preferably in the range of from 37 to 43 weight %.

In the case where the curing composition comprises other amines including the ones listed in the paragraphs above but excluding isophorone diamine (IPDA), 1,3-cyclohexane bis(methylamin) (1,3-BAC), m-Xylelenediamine (mXDA), methyldiaminocyclohexane (MDACH) and 1,2-diaminocyclohexane (DCH), it is preferred that the amount of said other amines is in the range of from 0.01 to 20 weight % based on the total weight of the curing composition, more preferably in the range of from 5 to 10 weight %.

It is particularly preferred that the at least one amine, according any one of the embodiments described herewith, has an active hydrogen equivalent weight of less than 100 g/EQ, more preferably has an active hydrogen equivalent weight in the range of from 70 to 95 g/EQ. It is also particularly preferred that each individual amine of the at least one amine comprised in the curing composition has an active hydrogen equivalent weight of less than 75 g/EQ, more preferably in the range of from 25 to 70 g/EQ, more preferably in the range of from 30 to 40 g/EQ.

It is also preferred that the at least one amine, according to any one of the embodiments described herewith, is siloxane free. Thus, it is particularly preferred that the at least one amine according to any one of the embodiments described herewith, does not comprise siloxanes, more preferably does not comprise amine-functional polyorganosiloxanes, more preferably does not comprise amine-functional polyorganosiloxanes having an average degree of polymerization of 10 or more.

It is further preferred that the at least one amine according to any one of the embodiments as disclosed herewith is monomeric polyamine, more preferably monomeric diamine. It is preferred that the curing composition of the present invention further comprises at least one co-accelerator selected from the group consisting of benzyl alcohols, tertiary amines, novolaks, imidazoles, tertiary aminophenols, styrenized phenols, organophosphines, Lewis bases, Lewis acids, organophosphates and combinations or two or more thereof, preferably the at least one co-accelerator is selected from the group consisting of 2,4,6-tris(dimethylaminomethyl)phenol, 2,4,6-tris(dimethylamino)phenol and bis[(dimethylamino) methyl]phenol, more preferably the at least one co-accelerator contains a mixture of 2,4,6-tris(dimethylaminomethyl) phenol and bis(dimethylaminomethyl)phenol. Mixtures of this kind are commercially available, for example as Ancamine® K54 (Evonik, Germany).

The co-accelerators may also be present in the epoxy resin component (A) if they are compatible with the epoxy resins.

In case where the curing composition comprises at least one co-accelerator, it is preferred that the amount of the at least one co-accelerator is in the range of from 0.001 to 5 weight % based on the total weight of the curing composition, preferably in the range of from 0.01 to 1 weight %, more preferably 0.1 to 0.5 weight %.

By using an adhesion promoter, the cross-linking of the borehole wall with the mortar compound is improved such that the adhesion increases in the cured state. Suitable adhesion promoters are selected from the group of silanes that have at least one Si bound hydrolyzable group. Thus, it is also preferred that the curing composition of the present invention further comprises at least one silane having at least one Si-bonded hydrolyzable group.

It is further preferred that the at least one silane is selected from the group consisting of, N-2-(aminoethyl)-3-aminopropylmethyl-diethoxysilane, N-2-(aminoethyl)-3-aminopropyltriethoxysilane, 3-aminopropyl-trimethoxysilane, 3-aminopropyltriethoxysilane, N-phenyl-3-aminoethyl-3-aminopropyl-trimethoxysilane, 3-mercaptopropyltrimethoxysilane, 3-mercaptopropylmethyldimethoxysilane, 3-aminopropyltrimethoxysilane (AMMO), 3-aminopropyltriethoxysilane (AMEO), 2-aminoethyl-3-aminopropyltrimethoxysilane (DAMO) and trimethoxysilylpropyldiethylenetetramine (TRIAMO) and mixtures of two or more thereof, more preferably from the group consisting of 3-aminopropyltrimethoxysilane (AMMO), 3-aminopropyltriethoxysilane (AMEO), 2-aminoethyl-3-aminopropyltrimethoxysilane (DAMO) and trimethoxysilylpropyldiethylenetetramine (TRIAMO) and mixtures of two or more thereof. Further silanes are described, for example, in EP3000792 A1, the content of which is hereby incorporated in the present application.

It is preferred that the amount of the at least one silane is in the range of from 0.01 to 10 weight % based on the total weight of the curing composition, preferably in the range of from 1 to 6 weight %, more preferably in the range of from 2 to 4 weight %.

It is also preferred that the curing composition of the present invention further comprises at least one non-reactive diluent (solvent). It is preferred the amount of the at least one non-reactive diluent is in the range of from 0.01 to 30 weight % based on the total weight of the curing composition, more preferably in the range of from 1 to 20 weight %, more preferably in the range of from 2 to 5 weight %. Examples of suitable solvents are alcohols, such as methanol, ethanol or glycol, di-lower alkyl-lower alkanoyl amides such as dimethylacetamide, lower alkyl benzenes such as xylenes or toluene, phthalic acid esters or paraffins.

It is preferred that the curing composition of the present invention further comprises at least one filler, preferably at least one inorganic filler. It is preferred that the amount of the at least one filler is in the range of from 0.1 to 75 weight % based on total weight of the curing composition, preferably in the range of from 5 to 70 weight %, more preferably in the range of from 10 to 65 weight %, more preferably 20 to 50 weight %, more preferably in the range of from 25 to 40 weight %.

In the case where the curing composition comprises at least one filler it is preferred that the at least one filler is selected from the group consisting of Portland cement, aluminate cement, hydraulically setting inorganic substances, quartz, glass, corundum, porcelain, earthenware, baryte, light spar, gypsum, talc, chalk, fumed silica and mixtures of two or more thereof. Fumed silica can also be described as a thickener. Particularly suitable fillers are quartz powders, fine quartz powders and ultra-fine quartz powders that have not been surface-treated, such as Millisil® W3, Millisil® W6, Millisil® W8 and Millisil® W12, preferably Millisil® W12. Silanized quartz powders, fine quartz powders and ultra-fine quartz powders can also be used. These are commercially available, for example, from the Silbond product series from Quarzwerke. The product series Silbond EST (modified with epoxysilane) and Silbond AST (treated with aminosilane) are particularly preferred. Furthermore, fillers based on aluminum oxide such as aluminum oxide ultra-fine filler of the ASFP type from Denka, Japan ($d_{50} = 0.3 \, \mu m$) or grades such as DAW or DAM with the type designations 45 ($d_{50} < 0.44 \, \mu m$), 07 ($d_{50} > 8.4 \, \mu m$), 05 ($d_{50} < 5.5 \, \mu m$) and 03 ($d_{50} < 4.1 \, \mu m$). Moreover, the surface-treated fine and ultra-fine fillers of the Aktisil AM type (treated with aminosilane, $d_{50} = 2.2 \, \mu m$) and Aktisil EM (treated with epoxysilane, d50 = 2.2 $\mu m$) from Hoffman Mineral can be used.

According to the present invention the at least one filler can be in a form of sands, flours, powders, molded bodies, fibers, balls, and mixtures of two or more thereof, preferably the at least one filler is in the form of fibers and/or balls. The at least one filler can be present in one or all components of the multi-component epoxy resin material described below. A suitable selection of the fillers with regard to type and particle size distribution/(fiber) length can be used to control application-relevant properties such as rheological behavior, press-out forces, internal strength, tensile strength, pull-out forces and impact strength.

Present invention further relates to a multi-component epoxy resin material, comprising: an epoxy resin component (A) and a curing component (B) comprising the curing composition according to any one of the embodiments disclosed herein, wherein the epoxy resin component (A) comprises at least one hardenable epoxy resin.

The at least one salt of thiocyanate as presently described can be contained in the epoxy resin component (A) or in the curing component (B) or in both the epoxy resin component (A) and the curing component (B). It is preferred that the at least one salt of thiocyanate is contained in the curing component (B), preferably only in the curing component (B). In this case, the curing composition described above is used in the multi-component epoxy resin system.

It is preferred that the at least one hardenable epoxy resin has one, two or more epoxy groups, preferably two epoxy groups per hardenable epoxy resin. The at least one hardenable epoxy resin can be saturated, unsaturated, aliphatic, alicyclic, aromatic, and heterocyclic or two or more combinations thereof. The at least one hardenable epoxy resin may have substituents which do not cause disruptive secondary reactions under the mixing or reaction conditions, for example alkyl or aryl substituents, ether groups and the like. Trimeric and tetrameric epoxides are also suitable in the context of the present invention.

According to the present invention the at least one hardenable epoxy resin is preferably selected from glycidyl ethers which are derived from polyhydric alcohols, more preferable from the group consisting of polyhydric phenols such as bisphenols and novolacs, It is preferred that the at least one hardenable epoxy resins have glycidylether functionality of 1.5 or more, preferably functionally of 2 or more, more preferably functionality of from 2 to 10.

It is preferred that the at least one hardenable exopy resin has an epoxy equivalent weight (EEW) in the range of from 120 to 2000 g/EQ, preferably in the range of from 140 to 400 g/EQ, more preferably in the range of from 155 to 195 g/EQ, more preferably in the range of from 165 to 185 g/EQ. It is also preferred that the at least one hardenable epoxy resin comprises a mixture of two or more of epoxy resins as described herein.

It is preferred that polyvalent phenols and are selected from the group consisting of resorcinol, hydroquinone, 2,2-bis-(4-hydroxyphenyl)propane (bisphenol A), isomer mixtures of dihydroxyphenylmethane (bisphenol F), tetrabromobisphenol A, novolacs, 4,4'-dihydroxyphenylcyclohexane and 4,4'-dihydroxy-3,3'- dimethyldiphenylpropane and mixtures of two or more thereof.

It is also preferred that the at least one hardenable epoxy resin is a diglycidyl ether of bisphenol A and/or bisphenol F. In particular, it is preferred that liquid diglycidyl ethers based on bisphenol A and/or F have an EEW that is in the range of from 180 to 190 g/EQ. It is also preferred that at least one hardenable epoxy resin can be selected from the group consisting of hexanediol diglycidyl ether, trimethylolpropane triglycidyl ether, bisphenol A epichlorohydrin resins, bisphenol F epichlorohydrin resins and combinations of two or more thereof. It is also preferred that the at least one hardenable epoxy resin has an average molecular weight of Mn ≤ 2000 g/mol.

It is preferred that the amount of the at least one hardenable exopy resin is in the range of from 0.01 to 100 weight % based on the total weight of the epoxy resin component (A), more preferably in the range of from 10 to 70 weight %, more preferably in the range of from 30 to 60 weight %.

The epoxy resin component (A) as presently described can further comprise at least one reactive diluent. The at least one reactive diluent according to the present invention can be selected from glycidyl ethers of aliphatic, alicyclic or aromatic monoalcohols or in particular polyalcohols having a lower viscosity than epoxides containing aromatic groups are used as reactive diluents. Examples of reactive diluents are monoglycidyl ethers, e.g. o-cresyl glycidyl ether, and glycidyl ethers having an epoxy functionality of at least 2, such as 1,4-butanediol diglycidyl ether (BDDGE), cyclohexanedimethanol diglycidyl ether and hexanediol diglycidyl ether, as well as tri- or higher glycidyl ethers, such as glycerol triglycidyl ether, pentaerythritol tetraglycidyl ether, trimethylolpropane triglycidyl ether (TMPTGE), or trimethylolethane triglycidyl ether (TMETGE), with trimethylolethane triglycidyl ether being preferred. Mixtures of two or more of these reactive diluents can also be used. It is particularly preferred that the at least one reactive diluent is selected from the group consisting of triglycidyl ethers, 1,4-butanediol diglycidyl ether (BDDGE), trimethylolpropane triglycidyl ether (TMPTGE), 1,4-butanediol diglycidyl ether (BDDGE), trimethylolethane triglycidyl ether (TMETGE) and mixtures of two or more thereof, more preferably 1,4-butanediol diglycidyl ether (BDDGE) and trimethylolpropane triglycidyl ether (TMPTGE), more preferably 1,4-butanediol diglycidyl ether (BDDGE) and trimethylolethane triglycidyl ether (TMETGE).

Suitable epoxy resins and reactive diluents can also be found in the standard reference from Michael Dornbusch, Ulrich Christ and Rob Rasing, "Epoxidharze," Vincentz Network GmbH & Co KG (2015), ISBN 13: 9783866308770. These compounds are included here by reference.

In case where the epoxy resin component (A) comprises at least one reactive diluent it is preferred that the amount of the at least one reactive diluent is in the range of from 0.01 to 60 weight % based on the total weight of the epoxy resin component (A), preferably in the range of from 1 to 20 weight %, more preferably in the range of from 2 to 7 weight %.

By use of an adhesion promoter the bonding of mortar to concrete is improved, so that bonding in the cured state is increased. Thus, in another embodiment, it is preferred that the epoxy resin component (A) according to any one of the embodiments of the present invention further comprises at least one silane having at least one Si-bonded hydrolysable group. Preferred examples of the at least one silane comprised in the component (A) are 3-glycidyloxypropyl trialkoxysilanes, such as 3-glycidyloxypropyl trimethoxysilane (GLYMO) or -3-glycidyloxypropyl triethoxy silane; glycidyloxymethyltrialkoxy silanes, such as glycidyloxymethyltrimethoxy silane or glycidyloxymethyltriethoxy silane; 3-glycidyloxypropylmethyldi-alkoxy silanes, such as 3-glycidyloxypropylmethyl dimethoxy silane or 3-glycidyloxy propylmethyl diethoxy silane; 2-(3,4-epoxycyclohexyl)ethyl trimethoxy silane; and/or tetraalkoxy silanes, such as tetramethoxy silane, tetraethoxy silane and/or tetrapropoxy silane, or a mixture of two or more thereof. It is preferred that the at least one silane comprised in component (A) is 3-Glycidyloxypropyl trimethoxy silane (e.g. Dynasylan® GLYMO by Evonik Industries, Germany).

It is preferred that the epoxy resin component (A) comprises at least one filler, preferably at least one inorganic filler. At least one filler has already been described in regard to the curing composition. It is preferred that the amount of the at least one filler is in the range of from 0.01 to 75 weight % based on total weight of the epoxy resin component (A), preferably in the range of from 5 to 70 weight %, more preferably in the range of from 10 to 60 weight %, more preferably 20 to 50 weight %, more preferably in the range of from 25 to 40 weight %.

In the case where the epoxy resin component (A) comprises at least one filler it is preferred that the at least one filler is selected from the group consisting of Portland cement, aluminate cement, hydraulically setting inorganic substances, quartz, glass, corundum, porcelain, earthenware, baryte, light spar, gypsum, talc, chalk, fumed silica and mixtures of two or more thereof. Fumed silica can also be described as a thickener. Particularly suitable fillers are quartz powders, fine quartz powders and ultra-fine quartz powders that have not been surface-treated, such as Millisil® W3, Millisil® W6, Millisil® W8 and Millisil® W12, preferably Millisil® W12. Silanized quartz powders, fine quartz powders and ultra-fine quartz powders can also be used. These are commercially available, for example, from the Silbond product series from Quarzwerke. The product series Silbond EST (modified with epoxysilane) and Silbond AST (treated with aminosilane) are particularly preferred. Furthermore, fillers based on aluminum oxide such as aluminum oxide ultra-fine filler of the ASFP type from Denka, Japan ($d_{50} = 0.3\ \mu m$) or grades such as DAW or DAM with the type designations 45 ($d_{50}$ < 0.44 $\mu m$), 07 ($d_{50}$ > 8.4 $\mu m$), 05 ($d_{50}$ < 5.5 $\mu m$) and 03 ($d_{50}$ < 4.1 $\mu m$). Moreover, the surface-treated fine and ultra-fine fillers of the Aktisil AM type (treated with aminosilane, $d_{50} = 2.2\ \mu m$) and Aktisil EM (treated with epoxysilane, d50 = 2.2 $\mu m$) from Hoffman Mineral can be used.

According to the present invention the at least one filler can be in a form of sands, flours, powders, molded bodies, fibers, balls, and mixtures of two or more thereof, preferably the at least one filler is in the form of fibers and/or balls. The at least one filler can be present in one or all components of the multi-component epoxy resin material described below. A suitable selection of the fillers with regard to type and particle size distribution/(fiber) length can be used to control application-relevant properties such as rheological behavior, press-out forces, internal strength, tensile strength, pull-out forces and impact strength.

Further conceivable additives to the epoxy resin component (A) are also thixotropic agents such as optionally organically after-treated fumed silica, bentonites, alkyl- and methylcelluloses and castor oil derivatives, plasticizers such as phthalic or sebacic acid esters, stabilizers, antistatic agents, thickeners, flexibilizers, hardening catalysts, rheology aids, wetting agents, coloring additives such as dyes or pigments, for example for different staining of components for improved control of their mixing, as well as wetting agents, desensitizing agents, dispersants and other control agents for the reaction rate, or mixtures of two or more thereof.

It is also preferred that the multi-component epoxy resin material according to any one of the embodiments disclosed herewith is in a form of a two-component system consisting of component (A) and component (B).

The multi-component epoxy resin material is preferably present in cartridges or film pouches which are characterized in that they comprise two or more separate chambers in which the epoxy resin component (A) and the curing component (B) are separately arranged so as to prevent a reaction.

The present invention further relates to a mortar composition comprising the multi-component epoxy resin material according to any one of the embodiments disclosed herein.

The present invention also relates to a use of at least one salt of thiocyanate in a multi component epoxy resin material for anchoring means to improve load values in comparison multi component epoxy resin compositions comprising calcium nitrate or calcium triflate.

For the use as intended of the multi-component epoxy resin system, the epoxy resin component (A) and the curing component (B) are discharged out of the separate chambers and mixed in a suitable device, for example a static mixer or dissolver. The mixture of epoxy resin component (A) and curing component (B) is then introduced into the previously cleaned borehole, preferably dry borehole, by means of a known injection device. The component to be fixed is then inserted into the mortar compound and aligned. The reactive constituents of the curing component (B) react with the epoxy resins of the resin component (A) by polyaddition such that the epoxy resin compound cures under environmental conditions within a desired period of time, preferably within minutes or hours, more preferably within 6 to 12 hours to reach 90% of final load.

The present invention relates to a method for the chemical fastening of construction elements in boreholes, wherein the mortar composition or the multi component epoxy resin material according to any one of the embodiments disclosed herein is used for the chemical fastening. The method according to the present invention is particularly suitable for the structural adhesion of concrete/concrete, steel/concrete or steel/steel or one of said materials with other mineral materials, for structural strengthening of components made of concrete, brickwork and other mineral materials, for reinforcement applications with fiber-reinforced polymers of building objects, for chemical fastening of surfaces made of concrete, steel or other mineral materials, in particular chemical fastening of construction elements and anchoring means, such as anchor rods, anchor bolts, (threaded) rods, (threaded) sleeves, reinforcing bars, screws and the like, in boreholes in various substrates, such as (reinforced) concrete, brickwork, other mineral materials, metals (e.g. steel), ceramics, plastics, glass, and wood. The method according to the invention is very particularly preferably used for the chemical fastening of anchoring means.

Components A and B are preferably mixed in a ratio that results in a balanced stoichiometry according to the EEW and AHEW values.

The AHEW value *(amine hydrogen equivalent weight,* H equivalent) provides the amount of the curing composition which contains 1 mol of reactive H. The AHEW is determined in a manner known to a person skilled in the art on the basis of the formulation of the reaction mixture from the known H equivalents of the used reactants and raw materials from which they are calculated.

Using the example of meta-xylylenediamine ($M_w$ = 136 g/mol, functionality = 4 eq/mol), the calculation of the AHEW is explained below by way of example:

$$\text{General formula: } AHEW = \frac{M_W}{Functionality} = \frac{136}{4}\left[\frac{g}{eq}\right] = 34\left[\frac{g}{eq}\right]$$

The EEW *(epoxide equivalent weight,* epoxide equivalent values) are generally provided by the manufacturers of the (hardenable) epoxy resin components used in each case or are calculated according to known methods. The EEW values provide the amount in g of epoxy resin which contains 1 mol of epoxy groups.

Experimentally, the AHEW was obtained by determining the glass transition temperature (Tg) from a mixture of epoxy resin (with known EEW) and an amine component. In this case, the glass transition temperatures of epoxy resin/amine mixtures were determined with different ratios. The sample was cooled at a heating rate of -20 K/min from 21 to -70°C, heated in a first heating cycle to 250°C (heating rate 10 K/min), then re-cooled to -70°C (heating rate -20 K/min) and heated (20 K/min) to 200°C in the last step. The mixture having the highest glass transition temperature in the second heating cycle ("$T_g2$") has the optimum ratio of epoxy resin and amine. The AHEW value can be calculated from the known EEW and the optimum epoxy resin/amine ratio.

Example: EEW = 158 g/mol

Amine/epoxy resin mixture having a maximum $T_g2$: 1 g amine with 4.65 g epoxy resin

$$AHEW = \frac{1}{4.65} \cdot 158 = 34\left[\frac{g}{eq}\right]$$

The curing composition, the multi-component epoxy resin material or the mortar composition according to the present invention is preferably used for construction purposes. The expression "for construction purposes" refers to the structural adhesion of concrete/concrete, steel/concrete or steel/steel or one of said materials with other mineral materials, to structural strengthening of components made of concrete, brickwork and other mineral materials, to reinforcement applications with fiber-reinforced polymers of building objects, to chemical fastening of surfaces made of concrete, steel or other mineral materials, in particular chemical fastening of construction elements and anchoring means, such as anchor rods, anchor bolts, (threaded) rods, (threaded) sleeves, reinforcing bars, screws and the like, in boreholes in various substrates, such as (reinforced) concrete, brickwork, other mineral materials, metals (e.g. steel), ceramics, plastics, glass, and wood. Most particularly preferably, the multi-component epoxy resin material according to the present invention and the mortar composition according to the present invention are used for chemically fastening anchoring means.

The use of at least one salt of thiocyanate within the meaning of the present invention as an accelerator in a curing composition of the curing component (B) together with the epoxy resin component (A), in particular in a multi-component epoxy resin material, makes it possible to improve load values in comparison to when calcium nitrate or calcium triflate are used as accelerators respectively. Furthermore, the cured epoxy resin material or mortar has excellent pull-out strength/-load values when used in dry boreholes and/or at elevated temperatures, for example in a temperature range of from 35°C to 80°C.

All embodiments of the present invention as described herewith can be combined with one another within the scope of the present invention. Further advantages of the invention can be also found in the following examples, which are not understood to be in any way limiting.

## EXAMPLES

*Table 1: List of the accelerators*

| Accelerator | CAS-number | Supplier |
|---|---|---|
| Ammonium thiocyanate | 1762-95-4 | Sigma-Aldrich |
| Sodium thiocyanate | 540-72-7 | Sigma-Aldrich |
| Potassium thiocyanate | 333-20-0 | Sigma-Aldrich |
| Calcium nitrate tetrahydrate | 13477-34-4 | Merck |
| Calcium trifluoromethanesulfonate also listed as calcium triflate | 55120-75-7 | Sigma-Aldrich |

*Table 2: List of the amine components*

| Amine component | Abbreviation | CAS-number |
|---|---|---|
| Isophorone diamine | IPDA | 2855-13-2 |
| 1,3-Cyclohexane bis(methylamin) | 1,3-BAC | 2579-20-6 |
| *m*-Xylelenediamine | mXDA | 1477-55-0 |
| Methyldiaminocyclohexane | MDACH | 13897-55-7 and 13897-56-8 |
| 1,2-Diaminocyclohexane | DCH | 694-83-7 |

### A-Component

First, all the liquid constituents were mixed. Then, fillers and thickeners were added to the respective mixed liquid constituents and stirred in the dissolver (PC laboratory system, volume 1L) under vacuum at 3500 rpm for 10 min.

### B-Component

Salts of thiocyanate and calcium triflate were dissolved as solids in the respective amine (curing agent) mixtures. Calcium nitrate tetrahydrate was dissolved in glycerol before being added to the respective amine mixture, resulting in an 80 % solution of calcium nitrate tetrahydrate in glycerin.

At the end, all the respective liquids were mixed together to which fillers and thickeners were added and stirred in the dissolver (PC laboratory system, volume 1L) under vacuum at 3500 rpm for 10 min.

The formulations as described in the examples below were mixed with the help of a speed mixer (Hauschild, Hamm) and then filled into a 1K cartridge before being introduced into the borehole. The mixing ratio was chosen in such a way that EEW and AHEW resulted in a balanced stoichiometry.

### Example 1: IPDA, 1,3-BAC, ammonium thiocyanate

*A-Component*

| Constituent | Function | Weight % | Trade Name | Supplier |
|---|---|---|---|---|
| (3-Glycidyloxypropyl)trimethoxysilane | Adhesion promoter | 2.8 | Dynasylan® GLYMO | Evonik Industries |
| Bisphenol A-based epoxy resin | Epoxy resin | 26.3 | Araldite® GY 240 | Huntsman |
| Bisphenol F-based epoxy resin | Epoxy resin | 14.1 | Araldite® GY 282 | Huntsman |
| 1,4-Butanediol diglycidyl ether | Reactive diluent | 5.1 | Araldite® DY-206 | Huntsman |
| Trimethylolpropane triglycidyl ether | Reactive diluent | 5.0 | Araldite® DY-T | Huntsman |
| Quartz | Filler | 45.6 | Millisil® W12 | Quarzwerke Frechen |
| Fumed silica | Thickener | 1.1 | Cab-O-Sil® TS-720 | Cabot Rheinfelden |
| EEW = 302 g/EQ | | | | |

*B-Component*

| Constituent | Function | Weight % | Trade Name | Supplier |
|---|---|---|---|---|
| Isophorone diamine | Curing agent | 7.9 | Vestamin® IPD | Evonik |
| 1,3-Cyclohexane bis(methylamin) | Curing agent | 31.7 | 1,3-BAC | Itochu Deutschland |
| Ammonium thiocyanate | Accelerator | 4.5 | Ammonium thiocyanate | Sigma-Aldrich |
| 2,4,6-Tris(dimethylaminomethyl)phenol | Co-accelerator | 3.0 | Ancamine® K54 | Evonik |
| Quartz | Filler | 46.5 | Millisil® W12 | Quarzwerke Frechen |
| Fumed silica | Thickener | 2.4 | Aerosil® R 805 | Evonik |
| Cellulose | Thickener | 4.0 | Jelucel® HM 30 | Jelu-Werk |
| AHEW = 93 g/EQ | | | | |

**Example 2: mXDA, 1,3-BAC, MDACH, ammonium thiocyanate**

*A-Component*

| Constituent | Function | Weight % | Trade Name | Supplier |
|---|---|---|---|---|
| (3-Glycidyloxypropyl)trimethoxysilan e | Adhesion promoter | 2.8 | Dynasylan® GLYMO | Evonik Industries |
| Bisphenol A-based epoxy resin | Epoxy resin | 31.1 | Araldite® GY 240 | Huntsman |
| Bisphenol F-based epoxy resin | Epoxy resin | 16.7 | Araldite® GY 282 | Huntsman |
| 1,4-Butanediol diglycidyl ether | Reactive diluent | 6.0 | Araldite® DY-206 | Huntsman |
| Trimethylolpropane triglycidyl ether | Reactive diluent | 6.0 | Araldite® DY-T | Huntsman |
| Quartz | Filler | 35.9 | Millisil® W12 | Quarzwerke Frechen |

(continued)

| Constituent | Function | Weight % | Trade Name | Supplier |
|---|---|---|---|---|
| Fumed silica | Thickener | 1.5 | Cab-O-Sil® TS-720 | Cabot Rheinfelden |
| EEW = 256 g/EQ | | | | |

### B-Component

| Constituent | Function | Weight % | Trade name | Supplier |
|---|---|---|---|---|
| m-Xylylenediamine | Curing agent | 3.6 | mXDA | Itochu Deutschland |
| 1,3-Cyclohexane bis(methylamin) | Curing agent | 29.5 | 1,3-BAC | Itochu Deutschland |
| MDACH | Curing agent | 8.3 | Baxxodur® EC 210 | BASF |
| Ammonium thiocyanate | Accelerator | 4.5 | Ammonium thiocyanate | Sigma-Aldrich |
| 2,4,6-Tris(dimethylaminomethyl) phenol | Co-accelerator | 3.0 | Ancamine® K54 | Evonik |
| Quartz | Filler | 44.9 | Millisil® W12 | Quarzwerke Frechen |
| Fumed silica | Thickener | 2.2 | Aerosil® R 805 | Evonik |
| Cellulose | Thickener | 4.0 | Jelucel® HM 30 | Jelu-Werk |
| AHEW = 84 g/EQ | | | | |

**Example 3: mXDA, 1,3-BAC, DCH, ammonium thiocyanate**

### A-Component

| Constituent | Function | Weight % | Trade Name | Supplier |
|---|---|---|---|---|
| (3-Glycidyloxypropyl)tri methoxysilane | Adhesion promoter | 2.8 | Dynasylan® GLYMO | Evonik Industries |
| Bisphenol A-based epoxy resin | Epoxy resin | 30.9 | Araldite® GY 240 | Huntsman |
| Bisphenol F-based epoxy resin | Epoxy resin | 16.6 | Araldite® GY 282 | Huntsman |
| 1,4-Butanediol-diglycidyl ether | Reactive diluent | 6.0 | Araldite® DY-206 | Huntsman |
| Trimethylolpropane triglycidyl ether | Reactive diluent | 5.9 | Araldite® DY-T | Huntsman |
| Quartz | Filler | 36.3 | Millisil® W12 | Quarzwerke Frechen |
| Fumed silica | Thickener | 1.5 | Cab-O-Sil® TS-720 | Cabot Rheinfelden |
| EEW = 258 g/EQ | | | | |

### B-Component

| Constituent | Function | Weight % | Trade Name | Supplier |
|---|---|---|---|---|
| m-Xylylenediamine | Curing agent | 3.6 | mXDA | Itochu Deutschland |
| 1,3-Cyclohexane bis(methylamin) | Curing agent | 30.8 | 1,3-BAC | Itochu Deutschland |
| 1,2-Diaminocyclohexane | Curing agent | 7.0 | Dytek® DCH | Invista |

(continued)

| Constituent | Function | Weight % | Trade Name | Supplier |
|---|---|---|---|---|
| Ammonium thiocyanate | Accelerator | 4.5 | Ammonium thiocyanate | Sigma-Aldrich |
| 2,4,6-Tris(dimethylaminomethyl) phenol | Co-accelerator | 3.0 | Ancamine® K54 | Evonik |
| Quartz | Filler | 44.9 | Millisil® W12 | Quarzwerke Frechen |
| Fumed silica | Thickener | 2.2 | Aerosil® R 805 | Evonik |
| Cellulose | Thickener | 4.0 | Jelucel® HM 30 | Jelu-Werk |
| AHEW = 84 g/EQ | | | | |

**Example 4: IPDA, 1,3-BAC, ammonium thiocyanate**

*A-Component*

| Constituent | Function | Weight % | Trade Name | Supplier |
|---|---|---|---|---|
| (3-Glycidyloxypropyl)trimethoxysilane | Adhesion promoter | 2.8 | Dynasylan® GLYMO | Evonik Industries |
| Bisphenol A-based epoxy resin | Epoxy resin | 25.7 | Araldite® GY 240 | Huntsman |
| Bisphenol F-based epoxy resin | Epoxy resin | 13.8 | Araldite® GY 282 | Huntsman |
| 1,4-Butanediol-diglycidyl ether | Reactive diluent | 5.0 | Araldite® DY-206 | Huntsman |
| Trimethylolpropane triglycidyl ether | Reactive diluent | 4.9 | Araldite® DY-T | Huntsman |
| Quartz | Filler | 45.2 | Millisil® W12 | Quarzwerke Frechen |
| Fumed silica | Thickener | 2.7 | Cab-O-Sil® TS-720 | Cabot Rheinfelden |
| EEW = 308 g/EQ | | | | |

*B-Component*

| Constituent | Function | Weight % | Trade Name | Supplier |
|---|---|---|---|---|
| Isophorone diamine | Curing agent | 20.0 | Vestamin® IPD | Evonik |
| 1,3-Cyclohexane bis(methylamine) | Curing agent | 20.0 | 1,3-BAC | Itochu Deutschland |
| Ammonium thiocyanate | Accelerator | 4.5 | Ammonium thiocyanate | Sigma-Aldrich |
| (3-Aminopropyl)triethoxysilane | Adhesion promoter | 3.0 | Dynasylan® AMEO | Evonik |
| Quartz | Filler | 43.5 | Millisil® W12 | Quarzwerke Frechen |
| Fumed silica | Thickener | 5.0 | Aerosil® R 805 | Evonik |
| Cellulose | Thickener | 4.0 | Jelucel® HM 30 | Jelu-Werk |
| AHEW = 94 g/EQ | | | | |

**Example 5: IPDA, 1,3-BAC, sodium thiocyanate**

*A-Component*

| Constituent | Function | Weight % | Trade Name | Supplier |
|---|---|---|---|---|
| (3-Glycidyloxypropyl)trimethoxysilane | Adhesion promoter | 2.8 | Dynasylan® GLYMO | Evonik Industries |
| Bisphenol A-based epoxy resin | Epoxy resin | 25.7 | Araldite® GY 240 | Huntsman |
| Bisphenol F-based epoxy resin | Epoxy resin | 13.8 | Araldite® GY 282 | Huntsman |
| 1,4-Butanediol-diglycidyl ether | Reactive diluent | 5.0 | Araldite® DY-206 | Huntsman |
| Trimethylolpropane triglycidyl ether | Reactive diluent | 4.9 | Araldite® DY-T | Huntsman |
| Quartz | Filler | 45.2 | Millisil® W12 | Quarzwerke Frechen |
| Fumed silica | Thickener | 2.7 | Cab-O-Sil® TS-720 | Cabot Rheinfelden |
| EEW = 308 g/EQ | | | | |

*B-Component*

| Constituent | Function | Weight % | Trade Name | Supplier |
|---|---|---|---|---|
| Isophorone diamine | Curing agent | 20.0 | Vestamin® IPD | Evonik |
| 1,3-Cyclohexane bis(methylamine) | Curing agent | 20.0 | 1,3-BAC | Itochu Deutschland |
| Sodium thiocyanate | Accelerator | 4.5 | Sodium thiocyanate | Sigma-Aldrich |
| (3-Aminopropyl)triethoxysilane | Adhesion promoter | 3.0 | Dynasylan® AMEO | Evonik |
| Quartz | Filler | 43.5 | Millisil® W12 | Quarzwerke Frechen |
| Fumed silica | Thickener | 5.0 | Aerosil® R 805 | Evonik |
| Cellulose | Thickener | 4.0 | Jelucel® HM 30 | Jelu-Werk |
| AHEW = 94 g/EQ | | | | |

**Example 6: IPDA, 1,3-BAC, potassium thiocyanate**

*A-Component*

| Constituent | Function | Weight % | Trade Name | Supplier |
|---|---|---|---|---|
| (3-Glycidyloxypropyl)trimethoxysilane | Adhesion promoter | 2.8 | Dynasylan® GLYMO | Evonik Industries |
| Bisphenol A-based epoxy resin | Epoxy resin | 25.7 | Araldite® GY 240 | Huntsman |
| Bisphenol F-based epoxy resin | Epoxy resin | 13.8 | Araldite® GY 282 | Huntsman |
| 1,4-Butanediol-diglycidyl ether | Reactive diluent | 5.0 | Araldite® DY-206 | Huntsman |
| Trimethylolpropane triglycidyl ether | Reactive diluent | 4.9 | Araldite® DY-T | Huntsman |

(continued)

| Constituent | Function | Weight % | Trade Name | Supplier |
|---|---|---|---|---|
| Quartz | Filler | 45.2 | Millisil® W12 | Quarzwerke Frechen |
| Fumed silica | Thickener | 2.7 | Cab-O-Sil® TS-720 | Cabot Rheinfelden |
| EEW = 308 g/EQ | | | | |

### B-Component

| Constituent | Function | Weight % | Trade Name | Supplier |
|---|---|---|---|---|
| Isophorone diamine | Curing agent | 20.0 | Vestamin® IPD | Evonik |
| 1,3-Cyclohexane bis(methylamine) | Curing agent | 20.0 | 1,3-BAC | Itochu Deutschland |
| Potassium thiocyanate | Accelerator | 4.5 | Potassium thiocyanate | Sigma-Aldrich |
| (3-Aminopropyl)triethoxysilane | Adhesion promoter | 3.0 | Dynasylan® AMEO | Evonik |
| Quartz | Filler | 43.5 | Millisil® W12 | Quarzwerke Frechen |
| Fumed silica | Thickener | 5.0 | Aerosil® R 805 | Evonik |
| Cellulose | Thickener | 4.0 | Jelucel® HM 30 | Jelu-Werk |
| AHEW = 94 g/EQ | | | | |

**Comparative Example 1: IPDA, 1,3-BAC, calcium nitrate tetrahydrate**

### A-Component

| Constituent | Function | Weight % | Trade Name | Supplier |
|---|---|---|---|---|
| (3-Glycidyloxypropyl)trimethoxysilane | Adhesion promoter | 2.8 | Dynasylan® GLYMO | Evonik Industries |
| Bisphenol A-based epoxy resin | Epoxy resin | 26.8 | Araldite® GY 240 | Huntsman |
| Bisphenol F-based epoxy resin | Epoxy resin | 14.5 | Araldite® GY 282 | Huntsman |
| 1,4-Butanediol-diglycidyl ether | Reactive diluent | 5.2 | Araldite® DY-206 | Huntsman |
| Trimethylolpropane triglycidyl ether | Reactive diluent | 5.1 | Araldite® DY-T | Huntsman |
| Quartz | Filler | 44.5 | Millisil® W12 | Quarzwerke Frechen |
| Fumed silica | Thickener | 1.1 | Cab-O-Sil® TS-720 | Cabot Rheinfelden |
| EEW = 295 g/EQ | | | | |

### B-Component

| Constituent | Function | Weight % | Trade Name | Supplier |
|---|---|---|---|---|
| Isophorone diamine | Curing agent | 7.9 | Vestamin® IPD | Evonik |
| 1,3-Cyclohexane bis(methylamine) | Curing agent | 31.7 | 1,3-BAC | Itochu Deutschland |

(continued)

| Constituent | Function | Weight % | Trade Name | Supplier |
|---|---|---|---|---|
| Calcium nitrate tetrahydrate | Accelerator | 2.2 | Calcium nitrate tetrahydrate | Sigma-Aldrich |
| Glycerin | Solvent | 0.5 | Glycerin ~86% | Carl Roth |
| 2,4,6-Tris(dimethylaminomethyl) phenol | Accelerator | 3.0 | Ancamine® K54 | Evonik |
| Quartz | Filler | 46.8 | Millisil® W12 | Quarzwerke Frechen |
| Fumed silica | Thickener | 2.7 | Aerosil® R 805 | Evonik |
| Cellulose | Thickener | 4.0 | Jelucel® HM 30 | Jelu-Werk |
| AHEW = 93 g/EQ | | | | |

**Comparative Example 2: mXDA, 1,3-BAC, MDACH, calcium nitrate tetrahydrate**

*A-Component*

| Constituent | Function | Weight % | Trade Name | Supplier |
|---|---|---|---|---|
| (3-Glycidyloxypropyl)trimethoxysilane | Adhesion promoter | 2.8 | Dynasylan® GLYMO | Evonik Industries |
| Bisphenol A-based epoxy resin | Epoxy resin | 32.0 | Araldite® GY 240 | Huntsman |
| Bisphenol F-based epoxy resin | Epoxy resin | 17.3 | Araldite® GY 282 | Huntsman |
| 1,4-Butanediol-diglycidyl ether | Reactive diluent | 6.2 | Araldite® DY-206 | Huntsman |
| Trimethylolpropane triglycidyl ether | Reactive diluent | 6.1 | Araldite® DY-T | Huntsman |
| Quartz | Filler | 33.9 | Millisil® W12 | Quarzwerke Frechen |
| Fumed silica | Thickener | 1.7 | Cab-O-Sil® TS-720 | Cabot Rheinfelden |
| EEW = 249 g/EQ | | | | |

*B-Component*

| Constituent | Function | Weight % | Trade Name | Supplier |
|---|---|---|---|---|
| m-Xylylenediamine | Curing agent | 3.6 | mXDA | Itochu Deutschland |
| 1,3-Cyclohexane bis(methylamine) | Curing agent | 29.5 | 1,3-BAC | Itochu Deutschland |
| MDACH | Curing agent | 8.3 | Baxxodur® EC 210 | BASF |
| Calcium nitrate tetrahydrate | Accelerator | 2.2 | Calcium nitrate tetrahydrate | Sigma-Aldrich |
| Glycerin | Solvent | 0.5 | Glycerin ~86% | Carl Roth |
| 2,4,6-Tris(dimethylaminomethyl) phenol | Accelerator | 3.0 | Ancamine® K54 | Evonik |
| Quartz | Filler | 45.8 | Millisil® W12 | Quarzwerke Frechen |
| Fumed silica | Thickener | 3.1 | Aerosil® R 805 | Evonik |

(continued)

| Constituent | Function | Weight % | Trade Name | Supplier |
|---|---|---|---|---|
| Cellulose | Thickener | 4.0 | Jelucel® HM 30 | Jelu-Werk |
| AHEW = 84 g/EQ | | | | |

**Comparative Example 3: mXDA, 1,3-BAC, DCH, calcium nitrate tetrahydrate**

*A-Component*

| Constituent | Function | Weight % | Trade Name | Supplier |
|---|---|---|---|---|
| (3-Glycidyloxypropyl)trimethoxysilane | Adhesion promoter | 2.8 | Dynasylan® GLYMO | Evonik Industries |
| Bisphenol A-based epoxy resin | Epoxy resin | 31.8 | Araldite® GY 240 | Huntsman |
| Bisphenol F-based epoxy resin | Epoxy resin | 17.1 | Araldite® GY 282 | Huntsman |
| 1,4-Butanediol-diglycidyl ether | Reactive diluent | 6.2 | Araldite® DY-206 | Huntsman |
| Trimethylolpropane triglycidyl ether | Reactive diluent | 6.1 | Araldite® DY-T | Huntsman |
| Quartz | Filler | 34.3 | Millisil® W12 | Quarzwerke Frechen |
| Fumed silica | Thickener | 1.7 | Cab-O-Sil® TS-720 | Cabot Rheinfelden |
| EEW = 250 g/EQ | | | | |

*B-Component*

| Constituent | Function | Weight % | Trade Name | Supplier |
|---|---|---|---|---|
| m-Xylylenediamine | Curing agent | 3.6 | mXDA | Itochu Deutschland |
| 1,3-Cyclohexane bis(methylamine) | Curing agent | 30.8 | 1,3-BAC | Itochu Deutschland |
| 1,2-Diaminocyclohexane | Curing agent | 17.0 | Dytek® DCH | Invista |
| Calcium nitrate tetrahydrate | Accelerator | 2.2 | Calcium nitrate tetra hydrate | Sigma-Aldrich |
| Glycerin | Solvent | 0.5 | Glycerin ~86% | Carl Roth |
| 2,4,6-Tris(dimethylaminomethyl) phenol | Co-accelerator | 3.0 | Ancamine® K54 | Evonik |
| Quartz | Filler | 45.8 | Millisil® W12 | Quarzwerke Frechen |
| Fumed silica | Thickener | 3.1 | Aerosil® R 805 | Evonik |
| Cellulose | Thickener | 4.0 | Jelucel® HM 30 | Jelu-Werk |
| AHEW = 84 g/EQ | | | | |

**Comparative Example 4: mXDA, 1,3-BAC, DCH, calcium trifluoromethanesulfonate**

### A-Component

| Constituent | Function | Weight % | Trade Name | Supplier |
|---|---|---|---|---|
| (3-Glycidyloxypropyl)tri methoxysilane | Adhesion promoter | 2.8 | Dynasylan® GLYMO | Evonik Industries |
| Bisphenol A-based epoxy resin | Epoxy resin | 30.9 | Araldite® GY 240 | Huntsman |
| Bisphenol F-based epoxy resin | Epoxy resin | 16.6 | Araldite® GY 282 | Huntsman |
| 1,4-Butanediol-diglycidyl ether | Reactive diluent | 6.0 | Araldite® DY-206 | Huntsman |
| Trimethylolpropane triglycidyl ether | Reactive diluent | 5.9 | Araldite® DY-T | Huntsman |
| Quartz | Filler | 36.3 | Millisil® W12 | Quarzwerke Frechen |
| Fumed silica | Thickener | 1.5 | Cab-O-Sil® TS-720 | Cabot Rheinfelden |
| EEW = 258 g/EQ | | | | |

### B-Component

| Constituent | Function | Weight % | Trade Name | Supplier |
|---|---|---|---|---|
| m-Xylylenediamine | Curing agent | 3.6 | mXDA | Itochu Deutschland |
| 1,3-Cyclohexane bis(methylamine) | Curing agent | 30.8 | 1,3-BAC | Itochu Deutschland |
| 1,2-Diaminocyclohexane | Curing agent | 7.0 | Dytek® DCH | Invista |
| Calcium trifluoromethanesulfonate | Accelerator | 2.0 | Calciumtrifluoro methansulfonat | Sigma-Aldrich |
| 2,4,6-Tris(dimethylaminomethyl) ph enol | Co-accelerator | 3.0 | Ancamine® K54 | Evonik |
| Quartz | Filler | 46.8 | Millisil® W12 | Quarzwerke Frechen |
| Fumed silica | Thickener | 2.8 | Aerosil® R 805 | Evonik |
| Cellulose | Thickener | 4.0 | Jelucel® HM 30 | Jelu-Werk |
| AHEW = 84 g/EQ | | | | |

**Comparative Example 5: IPDA, 1,3-BAC, calcium nitrate tetrahydrate**

### A-Component

| Constituent | Function | Weight % | Trade Name | Supplier |
|---|---|---|---|---|
| (3-Glycidyloxypropyl)tri methoxysilane | Adhesion promoter | 2.8 | Dynasylan® GLYMO | Evonik Industries |
| Bisphenol A-based epoxy resin | Epoxy resin | 25.7 | Araldite® GY 240 | Huntsman |
| Bisphenol F-based epoxy resin | Epoxy resin | 13.8 | Araldite® GY 282 | Huntsman |
| 1,4-Butanediol-diglycidyl ether | Reactive diluent | 50 5.0 | Araldite® DY-206 | Huntsman |

(continued)

| Constituent | Function | Weight % | Trade Name | Supplier |
|---|---|---|---|---|
| Trimethylolpropane triglycidyl ether | Reactive diluent | 4.9 | Araldite® DY-T | Huntsman |
| Quartz | Filler | 45.2 | Millisil® W12 | Quarzwerke Frechen |
| Fumed silica | Thickener | 2.7 | Cab-O-Sil® TS-720 | Cabot Rheinfelden |
| EEW = 308 g/EQ | | | | |

**B-Component**

| Constituent | Function | Weight % | Trade Name | Supplier |
|---|---|---|---|---|
| Isophorone diamine | Curing agent | 20.0 | Vestamin® IPD | Evonik |
| 1,3-Cyclohexane bis(methylamine) | Curing agent | 20.0 | 1,3-BAC | Itochu Deutschland |
| Calcium nitrate tetrahydrate | Accelerator | 2.2 | Calcium nitrate tetra hydrate | Sigma-Aldrich |
| Glycerin | Solvent | 0.5 | Glycerin ~86% | Carl Roth |
| (3-Aminopropyl)triethoxysi-lane | Adhesion promo-ter | 3.0 | Dynasylan® AMEO | Evonik |
| Quartz | Filler | 45.3 | Millisil® W12 | Quarzwerke Frechen |
| Fumed silica | Thickener | 5.0 | Aerosil® R 805 | Evonik |
| Cellulose | Thickener | 4.0 | Jelucel® HM 30 | Jelu-Werk |
| AHEW = 94 g/EQ | | | | |

A mortar composition, having as few as possible air bubbles, was filled into a 1 L cartridge and immediately injected into the borehole prepared for the pull-out tests. The pull-out strength of the mortar obtained by mixing the epoxy resin component (A) and curing component (B) according to the examples were determined using a high-strength anchor threaded rod M12 according to EAD 330499-01-0601 (December 2018), which was inserted into a hammer-drilled borehole with a diameter of 14 mm and a borehole depth of 62 mm with the respective mortar mass in C20/25 concrete. The boreholes were cleaned with compressed air (2 times 6 bar), a wire brush (2 times) and again compressed air (2 times 6 bar). Two thirds of the boreholes were filed from the bottom with the mortar composition. A threaded rod was then inserted by hand into the filled borehole, wherein the excess mortar was removed by a spatula. The curing time was 24 hours at 25 °C. The reference load R1 was tested directly after the curing time. The load at elevated temperature (B3) was tested after storage for 48 hours at 80 °C. The extractions took place also at 80 °C. The failure load was determined by centrically pulling out the anchor threaded rod with tight support. The load values, obtained with the hardened mortar compositions, were standardized to the respective concrete strength, and are disclosed in Table 3 below.

*Table 3: Load values*

| Examples | Accelerator | R1 [N/mm$^2$] | B3 80°C [N/mm$^2$] |
|---|---|---|---|
| Example 1 | Ammonium thiocyanate | 39.1 | -- |
| Comparative Example 1 | Calcium nitrate tetrahydrate | 37.7 | -- |
| Example 2 | Ammonium thiocyanate | 33.6 | -- |
| Comparative Example 2 | Calcium nitrate tetrahydrate | 32.3 | -- |
| Example 3 | Ammonium thiocyanate | 35.1 | -- |
| Comparative Example 3 | Calcium nitrate tetrahydrate | 32.9 | -- |
| Example 4 | Ammonium thiocyanate | 35.9 | 26.2 |
| Comparative Example 4 | Calcium trifluoromethanesulfonate | 31.6 | -- |

(continued)

| Examples | Accelerator | R1 [N/mm$^2$] | B3 80°C [N/mm$^2$] |
|---|---|---|---|
| Example 5 | Sodium thiocyanate | 36.2 | 27.0 |
| Comparative Example 5 | Calcium nitrate tetrahydrate | 34,9 | 25,7 |
| Example 6 | Potassium thiocyanate | 37.4 | 26.8 |
| "--" means "not tested" | | | |

As can be seen in Table 3 the examples according to the present invention (Examples 1-5) show improvement in load values in comparison the corresponding Comparative Examples 1-5. All the examples according to the present invention show an improvement in load values in comparison to the Comparative Examples 2-4. Further, Example 1 according to the present invention shows the highest load value of 39.1 N/mm$^2$ which is a meaningful improvement over the load value 37.7 N/mm$^2$ of Comparative Example 1. Similar advantage can be seen when comparing Example 5 to Comparative Example 5. Finally, load values measured at high temperature of 80 °C for Examples 4, 5 and 6 show an improvement of load values over the Comparative Example 5.

## Claims

1. A curing composition comprising at least one amine which is reactive to epoxy groups and at least one salt of thiocyanate.

2. The curing composition according to claim 1, wherein the amount of the at least one salt of thiocyanate is in the range of from 0.1 to 15 weight % based on the total weight of the curing composition.

3. The curing composition according to claim 1 or 2, wherein the at least one salt of thiocyanate is selected from the group consisting of ammonium thiocyanate, sodium thiocyanate, potassium thiocyanate, imidazolinium thiocyanate, guanidin thiocyanate, copper (I) thiocyanate, tetrabutylammonium thiocyanate, calcium thiocyanate, lithium thiocyanate, magnesium thiocyanate and mixtures of two or more thereof.

4. The curing composition according to any one of claims 1 to 3, wherein the at least one amine is selected from the group consisting of aliphatic amines, alicyclic amines, araliphatic amines, aromatic amines, Mannich bases and mixtures of two or more thereof, wherein the at least one amine has on average at least two reactive hydrogen atoms per molecule which are bonded to a nitrogen atom.

5. The curing composition according to any one of claims 1 to 4, wherein the at least one amine is selected from the group consisting of isophorone diamine (IPDA), 1,3-cyclohexane bis(methylamin) (1,3-BAC), m-Xylelenediamine (mXDA), Methyldiaminocyclohexane (MDACH), 1,2-diaminocyclohexane (DCH), and mixtures of two or more thereof.

6. The curing composition according to any one of claims 1 to 5, further comprising at least one filler.

7. The curing composition according to claim 6, wherein the amount of the at least one filler is in the range of from 0.1 to 75 weight % based on total weight of the curing composition.

8. A multi-component epoxy resin material, comprising:
an epoxy resin component (A) and a curing component (B) comprising the curing composition according to any one of claims 1-7, wherein the epoxy resin component (A) comprises at least one hardenable epoxy resin.

9. The multi-component epoxy resin material according to claim 8, wherein the at least one hardenable epoxy resin has one, two or more epoxy groups.

10. The multi-component epoxy resin material according to claim 8 or 9, wherein the epoxy resin component (A) comprises at least one reactive diluent.

11. The multi-component epoxy resin material according to any one of claims 8 to 10, wherein the epoxy resin component (A) comprises at least one filler.

12. The multi-component epoxy resin material according to claim 11, wherein the amount of the at least one filler is in the range of from 0.01 to 75 weight % based on total weight of the epoxy resin component (A).

13. The multi-component epoxy resin material according to any one of claim 8 to 12 in a form of a two-component system consisting of component (A) and component (B).

14. A mortar composition comprising the multi-component epoxy resin material according to any one of claims 8 to 13.

15. A use of at least one salt of thiocyanate in a multi component epoxy resin material for anchoring means to improve load values.

16. A method for the chemical fastening of construction elements in boreholes, wherein the mortar composition of claim 14 or the multi component epoxy resin material according to any one of claims 8 to 13 is used for the chemical fastening.

Europäisches
Patentamt

European
Patent Office

Office européen
des brevets

# EUROPEAN SEARCH REPORT

**Application Number**

EP 23 18 4224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 783 518 A (GOEL ANIL B [US]) 8 November 1988 (1988-11-08) * column 1, lines 4-7; claim 1; examples 4,6,8,10,12,14,16-24 * * columns 5-6 * | 1,2,4-13 | INV. C08G59/68 |
| X | US 3 763 098 A (GREEN H ET AL) 2 October 1973 (1973-10-02) * examples 13-25 * | 1,2,4-13 | |
| X | EP 3 103 796 A1 (ADEKA CORP [JP]) 14 December 2016 (2016-12-14) * paragraph [0034]; examples 1-2,2-2,3-2,4-2,5-2,6-2 * | 1-3,6-16 | |
| X | WO 2022/226386 A1 (PETCHLER MILES [US]) 27 October 2022 (2022-10-27) * paragraphs [0003], [0020], [0073] * | 1-16 | |
| X | US 3 660 354 A (UELZMANN HEINZ) 2 May 1972 (1972-05-02) * the whole document * | 1-3,6-13 | TECHNICAL FIELDS SEARCHED (IPC) |
| X | GB 1 568 725 A (VEBA CHEMIE AG) 4 June 1980 (1980-06-04) * columns 3-4; claims 1-2 * | 1-4,6-13 | C08G C09J |

The present search report has been drawn up for all claims

| Place of search | Date of completion of the search | Examiner |
|---|---|---|
| The Hague | 2 November 2023 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 4224

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2023

| Patent document cited in search report | | Publication date | Patent family member(s) | | Publication date |
|---|---|---|---|---|---|
| US 4783518 | A | 08-11-1988 | NONE | | |
| US 3763098 | A | 02-10-1973 | NONE | | |
| EP 3103796 | A1 | 14-12-2016 | CN | 105916844 A | 31-08-2016 |
| | | | EP | 3103796 A1 | 14-12-2016 |
| | | | KR | 20160111922 A | 27-09-2016 |
| | | | TW | 201533030 A | 01-09-2015 |
| | | | US | 2016333138 A1 | 17-11-2016 |
| | | | WO | 2015118952 A1 | 13-08-2015 |
| WO 2022226386 | A1 | 27-10-2022 | NONE | | |
| US 3660354 | A | 02-05-1972 | CA | 918845 A | 09-01-1973 |
| | | | DE | 2009709 A1 | 25-02-1971 |
| | | | GB | 1260642 A | 19-01-1972 |
| | | | NL | 7001882 A | 16-02-1971 |
| | | | US | 3660354 A | 02-05-1972 |
| GB 1568725 | A | 04-06-1980 | AT | 369762 B | 25-01-1983 |
| | | | BE | 858500 A | 02-01-1978 |
| | | | CH | 631193 A5 | 30-07-1982 |
| | | | DE | 2640408 A1 | 09-03-1978 |
| | | | FR | 2364239 A1 | 07-04-1978 |
| | | | GB | 1568725 A | 04-06-1980 |
| | | | JP | S5333300 A | 29-03-1978 |
| | | | NL | 7709826 A | 10-03-1978 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020058017 A1
- WO 2021185607 A1
- WO 2019101563 A1
- EP 3000792 A1

**Non-patent literature cited in the description**

- Gold Book. **A. D. MCNAUGHT** ; **A. WILKINSON**. IUPAC Compendium of Chemical Terminology. Blackwell Scientific Publications, 1997
- **MICHAEL DORNBUSCH** ; **ULRICH CHRIST** ; **ROB RASING**. Epoxidharze. Vincentz Network GmbH & Co KG, 2015